# EUROPEAN PATENT APPLICATION

(11) **EP 3 208 490 A1**
(43) Date of publication of application: **23.08.2017**
(21) Application number: 15863717.3
(22) Date of filing: 13.11.2015
(51) Int. Cl.: F16F 9/54, B60G 13/06, F16F 1/37, F16F 15/08

(54) **STRUT MOUNT**

(30) Priority: 27.11.2014 JP 2014239694
(71) Applicant: Kurashiki Kako Co., Ltd., Kurashiki-shi, Okayama 712-8555 (JP)
(72) Inventor: HAYASHI, Junya, Kurashiki-shi Okayama 712-8555 (JP)
(74) Representative: BRP Renaud & Partner mbB Rechtsanwälte Patentanwälte Steuerberater
(86) International application number: PCT/JP2015/005682
(87) International publication number: WO 2016/084325

(57) **Abstract**

Disclosed herein is a strut mount interposed between a vehicle body and a piston rod of a shock absorber of a suspension. The strut mount includes an interior member passed through by and fixed to the piston rod; an exterior member including a cylindrical part surrounding the interior member, and a bottom formed in a ring shape by extending radially inward from a lower end of the cylindrical part, an elastic member formed in a ring shape between the interior member and the exterior member, and sandwiched between a part of the vehicle body or an upper member and the bottom of the exterior member; and a positioner radially positioning the elastic member. The elastic member is not in contact with the cylindrical part of the exterior member over its entire axial length and over its entire circumference.

## Description

### TECHNICAL FIELD

The present disclosure relates to a strut mount interposed between a vehicle body and a piston rod of a shock absorber of a suspension.

### BACKGROUND ART

Patent Document 1 discloses a strut mount including an interior member, an exterior member, an elastic member, and an upper member. The interior member is passed through by and fixed to a piston rod. The exterior member includes a cylindrical part surrounding the interior member, and a bottom formed in a ring shape by extending radially inward from the lower end of the cylindrical part. The elastic member is formed in a ring shape between the interior member and the exterior member. The upper member and the bottom of the exterior member sandwich the elastic member. The outer circumferential surface of the elastic member is in contact with the inner circumferential surface of the cylindrical part of the exterior member. When vibrations are applied to the strut mount, the elastic member is elastically deformed to absorb the vibrations.

### CITATION LIST

### PATENT DOCUMENT

[PATENT DOCUMENT 1] Japanese Unexamined Patent Publication No. 2010-14132

### SUMMARY OF THE INVENTION

### TECHNICAL PROBLEM

According to the Patent Document 1, however, the outer circumferential surface of the elastic member is in contact with the inner circumferential surface of the cylindrical part of the exterior member. When vibrations are applied to the strut mount, the contact between the elastic member and the cylindrical part of the exterior member hinders the elastic deformation of the elastic member. This causes insufficient absorption of the vibrations and transmission of the vibrations to the vehicle body, which allows the occupant(s) of the vehicle to feel uncomfortable.

The present disclosure was made in view of the problem. It is an objective of the present disclosure to provide a strut mount, which is interposed between a vehicle body and a piston rod of a shock absorber of a suspension, and allows the occupant(s) of a vehicle to feel comfortable.

### SOLUTION TO THE PROBLEM

In order to achieve the objective, one of the features of the present disclosure is that an elastic member is positioned not to come into contact with a cylindrical part of an exterior member over its entire axial length and over its entire circumference.

Specifically, the present disclosure provides a strut mount interposed between a vehicle body and a piston rod of a shock absorber of a suspension, and having the following features.

According to the present disclosure, the strut mount includes an interior member passed through by and fixed to the piston rod; an exterior member including a cylindrical part surrounding the interior member, and a bottom formed in a ring shape by extending radially inward from a lower end of the cylindrical part, an elastic member formed in a ring shape between the interior member and the exterior member, and sandwiched between a part of the vehicle body or an upper member and the bottom of the exterior member; and a positioner radially positioning the elastic member. The elastic member is not in contact with the cylindrical part of the exterior member over its entire axial length and over its entire circumference.

With this configuration, the elastic member is radially positioned not to come into contact with the cylindrical part of the exterior member over its entire axial length and over its entire circumference. When vibrations are applied to the strut mount, the contact between the elastic member and the cylindrical part of the exterior member does not hinder elastic deformation of the elastic member. That is, the strut mount effectively absorbs the vibrations, thereby allowing the occupant(s) of the vehicle to feel comfortable.

In one preferred aspect, each of a bottom surface of the elastic member and a top surface of the bottom of the exterior member is inclined upward at a constant angle over its entire circumference, as it goes radially inward, and the positioner includes the bottom surface of the elastic member and the top surface of the bottom of the exterior member.

With this configuration, the top surface of the bottom of the exterior member comes into contact with the bottom surface of the elastic member over its entire circumference radially from the inside, thereby radially positioning the elastic member.

In addition, each of the bottom surface of the elastic member and the top surface of the bottom of the exterior member is inclined at the constant angle over its entire circumference. When the elastic member and the exterior member are assembled, there is thus no need to allow one of the elastic member and the exterior member to rotate with respect to the other so that the bottom surface of the elastic member circumferentially corresponds to the top surface of the bottom of the exterior member. This configuration facilitates the assembly.

There is also no need to provide any convex or concave for positioning in the elastic member. This configuration simplifies the structure of a mold for the elastic member.

In one preferred aspect, a projection is formed in a ring shape on one of a bottom surface of the elastic member and a top surface of the bottom of the exterior member over its entire circumference, a groove is formed in a ring shape on the other, the projection is to be fitted into the groove, and the positioner includes the projection and the groove.

With this configuration, the projection is fitted into the groove over their entire circumferences, thereby radially positioning the elastic member.

In addition, each of the projection and the groove is formed in a ring shape over its entire circumference of the associated surface. When the elastic member and the exterior member are assembled, there is thus no need to allow one of the elastic member and the exterior member to rotate with respect to the other so that the bottom surface of the elastic member circumferentially corresponds to the top surface of the bottom of the exterior member. This configuration facilitates the assembly.

In one preferred aspect, convexes are circumferentially formed on one of a bottom surface of the elastic member and a top surface of the bottom of the exterior member, concaves are circumferentially formed on the other, the convexes are to be fitted into the concaves, and the positioner includes the convexes and the concaves.

With this configuration, the convexes are fitted into the concaves, thereby radially positioning the elastic member.

In addition, the convexes and the concaves are formed circumferentially. This configuration limits the circumferential rotation of the elastic member with respect to the exterior member, thereby reducing wear of the elastic member.

In one preferred aspect, the elastic member is made of foamed urethane resin.

With this configuration, the elastic member is made of foamed urethane resin. This reduces the dynamic/static ratio, while improving damping properties.

### ADVANTAGES OF THE INVENTION

As described above, the present disclosure effectively absorbs vibrations, thereby allowing the occupant(s) of the vehicle to feel comfortable.

### BRIEF DESCRIPTION OF THE DRAWINGS

[FIG. 1] FIG. 1 is a perspective view of a strut mount according to an embodiment 1, before fixture of an upper member.
[FIG. 2] FIG. 2 is a top view of the strut mount according to the embodiment 1.
[FIG. 3] FIG. 3 is a cross-sectional view taken along the line A-A of FIG. 2.
[FIG. 4] FIG. 4 illustrates an embodiment 2 and corresponds to FIG. 1.
[FIG. 5] FIG. 5 illustrates the embodiment 2 and corresponds to FIG. 3.
[FIG. 6] FIG. 6 illustrates an embodiment 3 and corresponds to FIG. 1.
[FIG. 7] FIG. 7 illustrates the embodiment 3 and corresponds to FIG. 3.

### DESCRIPTION OF EMBODIMENTS

Embodiments will now be described with reference to the drawings.

### Embodiment 1

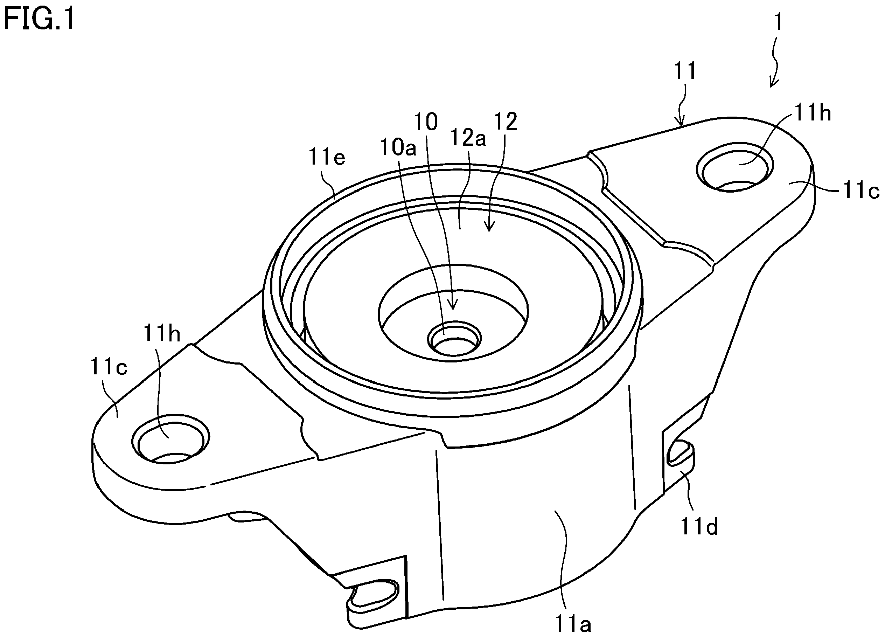

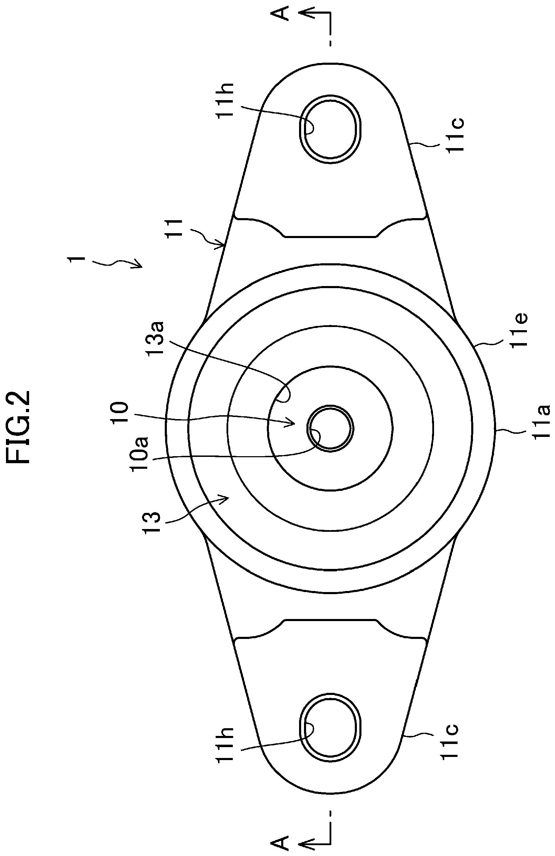

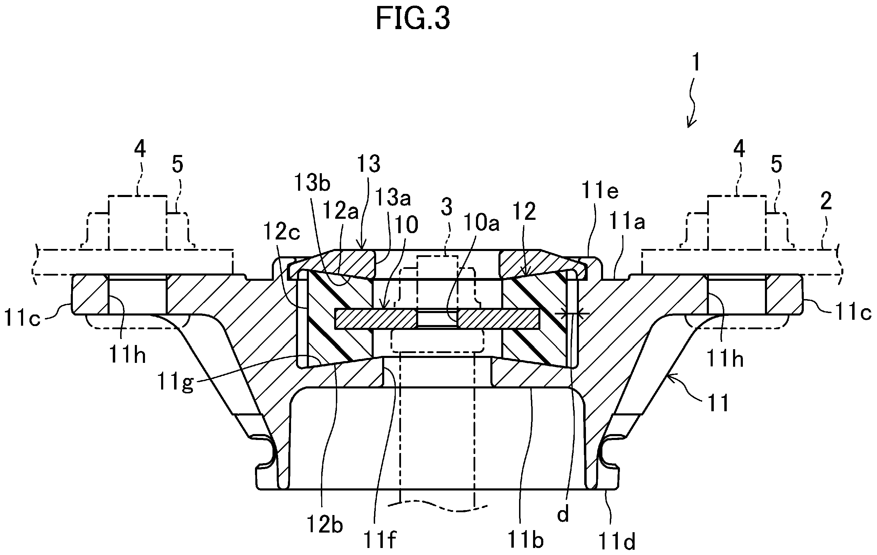

FIGS. 1 to 3 illustrate a strut mount 1 according to an embodiment 1 of the present disclosure. This strut mount 1 is interposed between a body panel 2 of a vehicle and a piston rod 3 of a shock absorber of a suspension to reduce transmission of vibrations from a road surface to the vehicle body panel 2.

The strut mount 1 includes an interior member 10, an exterior member 11, an elastic member 12, and an upper member 13. The interior member 10 is a metal disk fixed to the upper end of the piston rod 3. The exterior member 11 is made of metal and surrounds the interior member 10. The elastic member 12 is formed in a ring shape between the interior member 10 and the exterior member 11. The upper member 13 is attached to the exterior member 11.

A circular insertion hole 10a is formed at the center of the interior member 10. The piston rod 3 is inserted through and fixed to the insertion hole 10a.

The exterior member 11 includes a cylindrical part 11a, a bottom 11b, a pair of flanges 11c, and a holder 11d. The cylindrical part 11a surrounds the interior member 10. The bottom 11b is formed in a ring shape and extends radially inward from the lower end of the cylindrical part 11a. The flanges 11c expand radially outward from the upper end of the cylindrical part 11a in the opposite direction to form an angle of 180 degrees. The holder 11d is formed in a cylindrical shape projecting downward from the outer circumferential end of the bottom 11b.

A convex 11e is formed in a ring shape on the upper end surface of the cylindrical part 11a over its entire circumference. The tip of the convex 11e bends inward in a substantially L-shape in cross-section. The tip of the convex 11e does not bend but projects upward as shown in FIG. 1 before fixture of the upper member 13.

A circular opening 11f is formed at the center of the bottom 11b. The piston rod 3 is inserted through the opening 11f. The top surface 11g of the bottom 11b is inclined upward at a constant angle over its entire circumference as it goes radially inward. The top surface 11g of the bottom 11b is inclined from the horizontal plane at an angle of 5 degrees, for example.

A fastening hole 11h penetrates each of the flanges 11c. The shaft of a bolt 4 is inserted through the fastening hole 11h and a fastening hole (not shown) in the vehicle body panel 2. The tip of the shaft is screwed into a nut 5 to engage the flanges 11c with the vehicle body panel 2.

The elastic member 12 is made of foamed urethane resin such as methylene diphenyl diisocyanate (MDI). The elastic member 12 covers the entire outer circumference of the interior member 10 and is surrounded by the cylindrical part 11a and the bottom 11b of the exterior member 11. The elastic member 12 is in a vertically symmetrical, substantially cylindrical shape. The interior member 10 is inserted into the elastic member 12 to be integral with the elastic member 12 by insert molding. The top surface 12a of the elastic member 12 is inclined downward at a constant angle over its entire circumference as it goes radially inward. On the other hand, the bottom surface 12b of the elastic member 12 is inclined upward at a constant angle over its entire circumference as it goes radially inward. The upper and bottom surfaces 12a and 12b of the elastic member 12 are inclined from the horizontal plane at an angle of 5 degrees, for example. The outer circumferential surface 12c of the elastic member 12 faces the cylindrical part 11 a of the exterior member 11 over its entire axial length and over its entire circumference at a distance of d. That is, the elastic member 12 is not in contact with the cylindrical part 11a of the exterior member 11 over its entire axial length and over its entire circumference. The distance d between the outer circumferential surface 12c of the elastic member 12 and the cylindrical part 11a of the exterior member 11 is larger than zero, even if the elastic member 12 is elastically deformed at a maximum due to vibration absorption. On the other hand, the top surface 11g of the bottom 11b of the exterior member 11 abuts on the bottom surface 12b of the elastic member 12 radially from the inside over its entire circumference. This limits radial movement of the elastic member 12, that is, radially positions the elastic member 12. That is, the bottom surface 12b of the elastic member 12, and the top surface 11g of the bottom 11b of the exterior member 11 function as a positioner.

The upper member 13 and the bottom 11b of the exterior member 11 sandwich and compress the elastic member 12 vertically. With no vibration applied to the strut mount 1, the elastic member 12 has a vertical compressibility of 20% to 30%. The outer circumferential end of the upper member 13 is fixed to the exterior member 11 by caulking, while being sandwiched between the tip of the convex 11e and the cylindrical part 11a of the exterior member 11. A circular opening 13a is formed at the center of the upper member 13. The upper end of the piston rod 3 is inserted through the circular opening 13a. The bottom surface 13b of the upper member 13 is inclined downward at a constant angle over its entire circumference as it goes radially inward. The bottom surface 13b of the upper member 13 is inclined from the horizontal plane at an angle of 5 degrees, for example. The bottom surface 13b of the upper member 13 abuts on the top surface 12a of the elastic member 12 radially from the inside over its entire circumference. This limits the radial movement of the elastic member 12 more reliably.

When vibrations are applied to the suspension from a load surface while the vehicle travels, the suspension absorbs the vibrations. If excessive vibrations that are not absorbed by the suspension are applied to the strut mount 1, the elastic member 12 is elastically deformed so that the strut mount 1 absorbs the excessive vibrations. This reduces vibrations to be transmitted to the vehicle body panel 2.

According to this embodiment 1, the elastic member 12 is radially positioned not to come into contact with the cylindrical part 11a of the exterior member 11 over its entire axial length and over its entire circumference. When vibrations are applied to the strut mount 1, the contact between the elastic member 12 and the cylindrical part 11a of the exterior member 11 does not hinder the elastic deformation of the elastic member 12. This allows the strut mount 1 to absorb the vibrations effectively, thereby allowing the occupant(s) of the vehicle to feel comfortable.

Each of the bottom surface 12b of the elastic member 12 and the top surface 11g of the bottom 11b of the exterior member 11 is inclined at a constant angle over its entire circumference. When the elastic member 12 and the exterior member 11 are assembled, there is thus no need to allow one of the elastic member 12 and the exterior member 11 to rotate with respect to the other so that the bottom surface 12b of the elastic member 12 circumferentially corresponds to the top surface 11g of the bottom 11b of the exterior member 11. That is, the assembly is facilitated.

There is also no need to provide any convex or concave for positioning in the elastic member 12. This configuration simplifies the structure of a mold for the elastic member 12.

The elastic member 12 made of foamed urethane resin improves damping properties while reducing the dynamic/static ratio.

### Embodiment 2

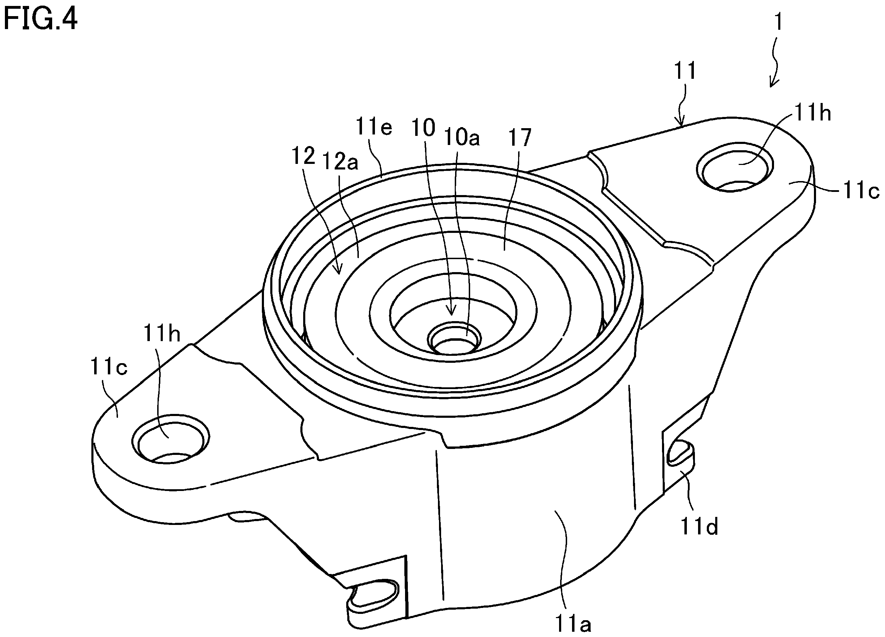

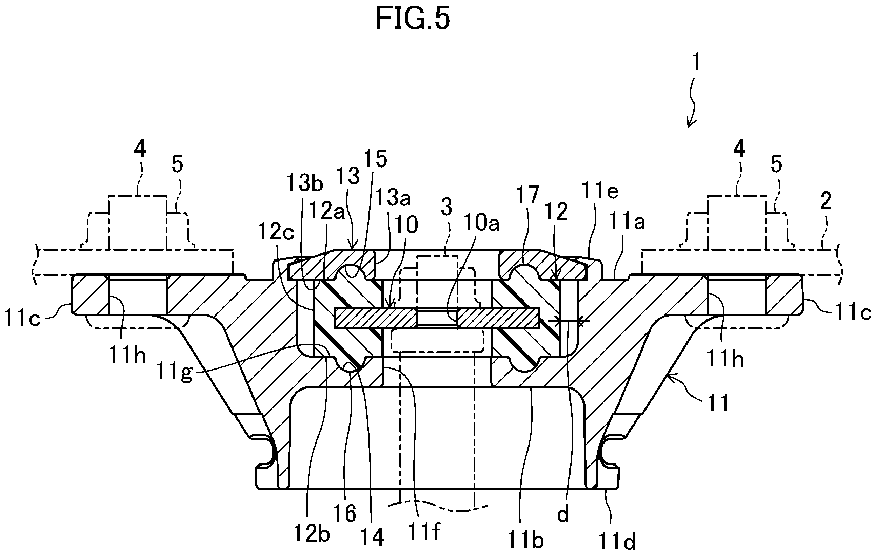

FIGS. 4 and 5 illustrate a strut mount 1 according to an embodiment 2 of the present disclosure. In this embodiment 2, the top surface 11g of the bottom 11b of the exterior member 11 is not inclined. A groove 14 is formed in a ring shape on the top surface 11g of the bottom 11b over its entire circumference. The bottom surface 13b of the upper member 13 is also not inclined. A groove 15 is formed in a ring shape on the bottom surface 13b of the upper member 13 over its entire circumference.

Neither the top surface 12a nor the bottom surface 12b of the elastic member 12 is inclined. A projection 16 is formed in a ring shape on the bottom surface 12b of the elastic member 12 over its entire circumference. This projection 16 is fitted into the groove 14 of the bottom 11b of the exterior member 11 over its entire circumference, thereby radially positioning the elastic member 12. That is, the projection 16 of the elastic member 12 and the groove 14 of the exterior member 11 function as a positioner.

In addition, a projection 17 is formed in a ring shape on the top surface 12a of the elastic member 12 over its entire circumference. This projection 17 is fitted into the groove 15 of the upper member 13 over its entire circumference. This limits the radial movement of the elastic member 12 more reliably.

In this embodiment 2, each of the projection 16 of the elastic member 12 and the groove 14 of the exterior member 11 is formed in a ring extending over its entire circumference. When the elastic member 12 and the exterior member 11 are assembled, there is thus no need to allow one of the elastic member 12 and the exterior member 11 to rotate with respect to the other so that the bottom surface 12b of the elastic member 12 circumferentially corresponds to the top surface 11g of the bottom 11b of the exterior member 11. That is, the assembly is facilitated.

Each of the projection 17 of the elastic member 12 and the groove 15 of the upper member 13 is also formed in a ring shape extending over its entire circumference. When the upper member 13 is attached to the exterior member 11, there is thus no need to allow one of the elastic member 12 and the upper member 13 to rotate with respect to the other so that the top surface 12a of the elastic member 12 circumferentially corresponds to the bottom surface 13b of the upper member 13. That is, the assembly is facilitated.

### Embodiment 3

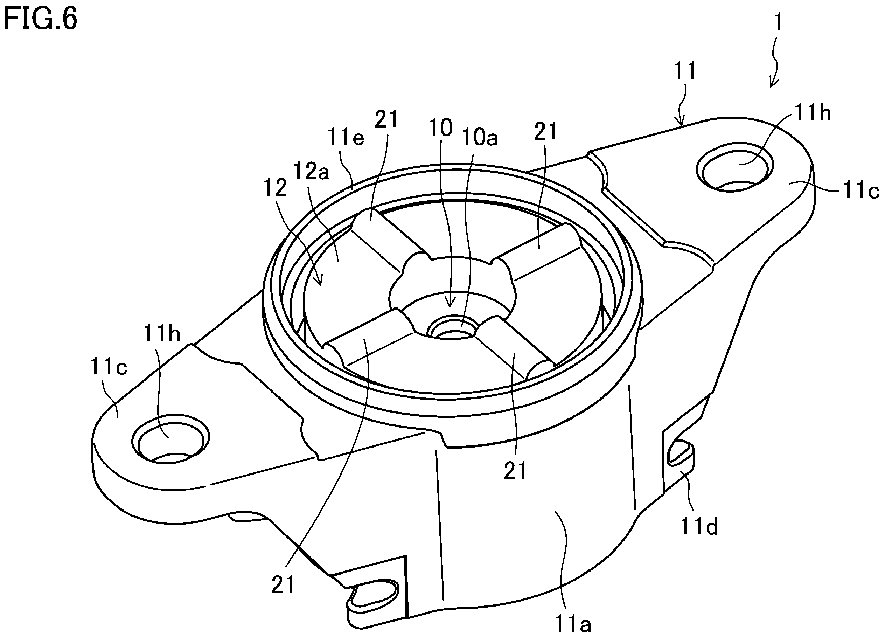

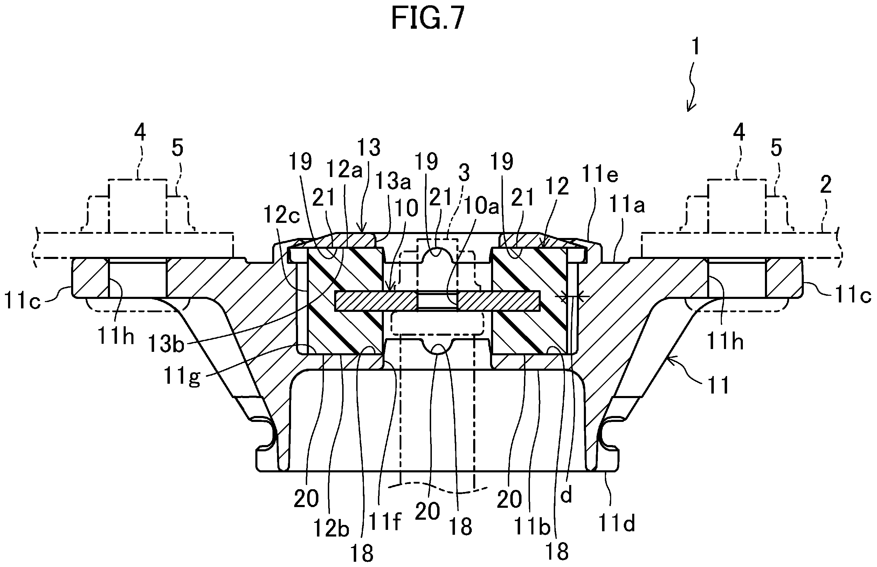

FIGS. 6 and 7 illustrate a strut mount 1 according to an embodiment 3 of the present disclosure. In this embodiment 3, four grooves 18 as radially extending concaves are formed on the top surface 11g of the bottom 11b of the exterior member 11. Each groove 18 is spaced apart from the adjacent one of the grooves 18 along the circumference of the top surface 11g to form an angle of 90 degrees. In addition, four radially extending grooves 19 are formed on the bottom surface 13b of the upper member 13 such that each groove 19 is spaced apart from the adjacent one of the grooves 19 along the circumference of the bottom surface 13b to form an angle of 90 degrees.

On the other hand, four projections 20 as radially extending convexes are formed on the bottom surface 12b of the elastic member 12 such that each projection 20 is spaced apart from the adjacent one of the projections 20 to form an angle of 90 degrees along the circumference of the bottom surface 12b. These projections 20 are fitted into the grooves 18 on the bottom 11b of the exterior member 11 to enable radial and circumferential positioning of the elastic member 12. That is, the projections 20 of the elastic member 12 and the grooves 18 of the exterior member 11 function as a positioner.

Four radially extending projections 21 are formed on the top surface 12a of the elastic member 12 such that each projection 21 is spaced apart from the adjacent one of the projections 21 along the circumference of the top surface 12a to form an angle of 90 degrees. These projections 21 are fitted into the grooves 19 of the upper member 13. This limits the radial and circumferential movements of the elastic member 12 more reliably.

In this embodiment 3, the circumferential rotation of the elastic member 12 is limited with respect to the exterior member 11 to reduce wear of the elastic member 12.

While the elastic member 12 is made of foamed urethane resin in the embodiments 1 to 3, it may be made of natural rubber or silicone rubber.

In the embodiments 2 and 3, the projections 16 and 20 are formed on the bottom surface 12b of the elastic member 12 and the grooves 14 and 18 are formed on the top surface 11g of the bottom 11b of the exterior member 11. In contrast, the grooves 14 and 18 may be formed on the bottom surface 12b of the elastic member 12, and the projections 16 and 20 may be formed on the top surface 11g of the bottom 11b of the exterior member 11.

Similarly, in the embodiments 2 and 3, the projections 17 and 21 are formed on the top surface 12a of the elastic member 12, and the grooves 15 and 19 are formed on the bottom surface 13b of the upper member 13. In contrast, the grooves 15 and 19 may be formed on the top surface 12a of the elastic member 12, and the projections 17 and 21 may be formed on the bottom surface 13b of the upper member 13.

In the embodiment 3, the four grooves 18 and the four projections 20 are provided. The number of the grooves 18 and the projections 20 is, however, not limited to four, as long as a plurality of grooves 18 and projections 20 are provided to radially position the elastic member 12. The projections 20 and the grooves 18 may be replaced with convexes in a circular, rectangular, or any other shape in plan view, and concaves to be fitted into the convexes, respectively. In this case as well, the number of the convexes and the concaves is not limited to four, as long as a plurality of convexes and concaves are provided to radially position the elastic member 12.

In the embodiments 1 to 3, the upper member 13 and the bottom 11b of the exterior member 11 sandwich the elastic member 12. In place of the upper member 13, a part of the vehicle body panel 2 and the bottom 11b of the exterior member 11 may sandwich the elastic member 12.

The embodiments described above are to be regarded as illustrative in nature, and not intended to limit the scope of the present disclosure, its equivalents and application.

### INDUSTRIAL APPLICABILITY

The present disclosure is useful as a strut mount interposed between a vehicle body and a piston rod of a shock absorber of a suspension.

### DESCRIPTION OF REFERENCE CHARACTERS

- 1: Strut Mount
- 2: Body Panel of Vehicle (Vehicle Body)
- 3: Piston Rod
- 10: Interior Member
- 11: Exterior Member
- 11a: Cylindrical Part
- 11b: Bottom
- 11g: Top Surface
- 12: Elastic Member
- 12b: Bottom Surface
- 13: Upper Member
- 14: Groove
- 16: Projection
- 18: Groove (Concave)
- 20: Projection (Convex)

## Claims

1. A strut mount interposed between a vehicle body and a piston rod of a shock absorber of a suspension, the strut mount comprising:
an interior member passed through by and fixed to the piston rod;
an exterior member including
a cylindrical part surrounding the interior member, and
a bottom formed in a ring shape by extending radially inward from a lower end of the cylindrical part,
an elastic member formed in a ring shape between the interior member and the exterior member, and sandwiched between a part of the vehicle body or an upper member and the bottom of the exterior member; and
a positioner radially positioning the elastic member, wherein
the elastic member is not in contact with the cylindrical part of the exterior member over its entire axial length and over its entire circumference.

2. The strut mount of claim 1, wherein
each of a bottom surface of the elastic member and a top surface of the bottom of the exterior member is inclined upward at a constant angle over its entire circumference, as it goes radially inward, and
the positioner includes the bottom surface of the elastic member and the top surface of the bottom of the exterior member.

3. The strut mount of claim 1, wherein
a projection is formed in a ring shape on one of a bottom surface of the elastic member and a top surface of the bottom of the exterior member over its entire circumference,
a groove is formed in a ring shape on the other,
the projection is to be fitted into the groove, and
the positioner includes the projection and the groove.

4. The strut mount of claim 1, wherein
convexes are circumferentially formed on one of a bottom surface of the elastic member and a top surface of the bottom of the exterior member,
concaves are circumferentially formed on the other,
the convexes are to be fitted into the concaves, and
the positioner includes the convexes and the concaves.

5. The strut mount of claim 1, wherein
the elastic member is made of foamed urethane resin.
